# EUROPEAN PATENT APPLICATION

(11) **EP 4 675 405 A1**
(43) Date of publication of application: **07.01.2026**
(21) Application number: 23929835.9
(22) Date of filing: 19.09.2023
(51) Int. Cl.: G06F 3/041

(54) **WRITING VERIFICATION METHOD AND DEVICE, INTERACTIVE PANEL, AND STORAGE MEDIUM**

(30) Priority: 31.03.2023 CN 202310345464
(71) Applicant: Guangzhou Xianchuang Technology Co., Ltd., Guangzhou, Guangdong 510000 (CN)
(72) Inventor: The designation of the inventor has not yet been filed
(74) Representative: Fish & Richardson P.C.
(86) International application number: PCT/CN2023/119739
(87) International publication number: WO 2024/198261

(57) **Abstract**

The present disclosure relates to a writing verification method, writing verification device, an interactive board, and a storage medium. The method includes: scanning an infrared signal on a surface of a display screen to detect a touch state between a touch object and the display screen; receiving a vibration signal generated in the display screen; extracting a friction signal from the vibration signal, where the friction signal represents that the touch object rubs the surface of the display screen; detecting a writing state between the touch object and the display screen based on the friction signal; in a case that the writing state is that the touch object is writing on the surface of the display screen, verifying the writing state based on the friction signal. In embodiments, the writing operation is analyzed, a friction signal is used as the representation of the writing operation, a writing state is detected by analyzing the friction signal, and in an interactive board environment, the writing state is verified base on a touch state, so that the accuracy of the writing state can be ensured, and the problem of zero-height writing can be solved.

## Description

The present disclosure claims a priority from Chinese patent application No. 202310345464.5 entitled "WRITING VERIFICATION METHOD, WRITING VERIFICATION DEVICE, INTERACTIVE BOARD AND STORAGE MEDIUM", which is filed with CNIPA on March 31, 2023, and the entire contents of which are incorporated into the present disclosure by reference.

### FIELD

The present disclosure relates to the technical field of touch operation, and in particular to a writing verification method, a writing verification device, an interactive board and a storage medium.

### BACKGROUND

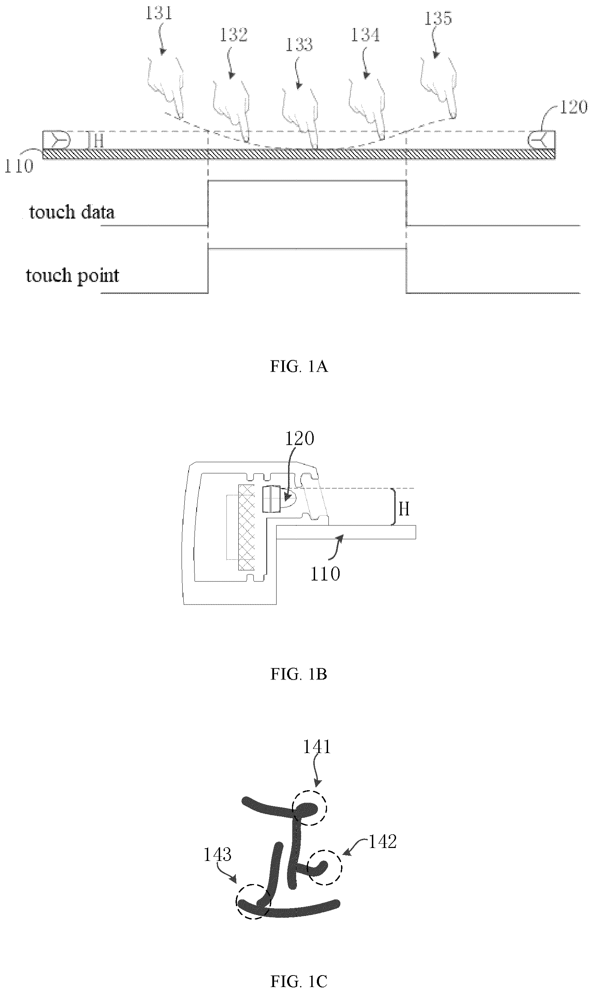

The infrared touch system is one of the touch modes adopted by the interactive board. As shown in FIG.1A, infrared sensors 120 are generally arranged on both sides of the surface of the display screen 110. The infrared light transmitted by the infrared sensors 120 propagate on a surface of the display screen 110. By analyzing the situation where the touch object (for example, a hand or a pen) blocks the infrared light, the position of the touch object on the surface of the display screen 110 is calculated, and touch data is generated. The touch data is then further processed by the interactive board.

Furthermore, as shown in FIG.1B, the infrared sensors 120 are higher than the surface of the display screen 110 (especially glass), and their infrared lights are transmitted through a filter strip. Therefore, the touch object would have a certain height H when writing. The height H is relatively large, generally greater than 2 mm, which can easily lead to problems such as connected strokes and reduce the quality of writing.

### SUMMARY

The present disclosure provides a writing verification method, a writing verification device, an interactive board and a storage medium, so as to solve the problem of how to reduce the height of writing without changing the structure of the interactive board.

According to a first aspect of the present disclosure, a writing verification method applied to an interactive board is provided, which includes: scanning an infrared signal on a surface of a display screen to detect a touch state between a touch object and the display screen; receiving a vibration signal generated in the display screen; extracting a friction signal from the vibration signal, where the friction signal represents that the touch object rubs the surface of the display screen; detecting a writing state between the touch object and the display screen based on the friction signal; in a case that the writing state is that the touch object is writing on the surface of the display screen, verifying the writing state based on the friction signal.

According to a second aspect of the present disclosure, a writing verification device applied to an interactive board is provided, which includes: a touch state detecting module configured to scan an infrared signal on a surface of the display screen to detect a touch state between the touch object and the display screen; a vibration signal receiving module configured to receive a vibration signal generated in the display screen; a friction signal extracting module configured to extract a friction signal from the vibration signal, where the friction signal represents that the touch object rubs the surface of the display screen; a writing state detecting module configured to detect a writing state between the touch object and the display screen based on the friction signal; and a writing state verifying module configured to verify the writing state based on the friction signal in a case that the writing state is that the touch object is writing on the surface of the display screen.

According to a third aspect of the present disclosure, an interactive board is provided, which includes: a display screen; an infrared sensor configured to scan an infrared signal on a surface of the display screen to detect a touch state between the touch object and the display screen; a vibration sensor configured to receive a vibration signal generated in the display screen; a friction signal extractor configured to extract a friction signal from the vibration signal, where the friction signal represents that the touch object rubs the surface of the display screen; and a processor configured to detect a writing state between the touch object and the display screen based on the friction signal, and verify the writing state based on the friction signal in a case that the writing state is that the touch object is writing on the surface of the display screen.

According to a fourth aspect of the present disclosure, an interactive board is provided, which includes: one or more processors; and a memory for storing one or more programs; where the one or more programs, when executed by the one or more processors, perform the writing verification method of first aspect of the present disclosure.

According to a fifth aspect of the present disclosure, a computer-readable storage medium is provided, on which a computer program is stored, where the computer program, when executed by a processor, performs the writing verification method of first aspect of the present disclosure.

In this embodiment, an infrared signal is scanned on the surface of the display screen to detect the touch state between the touch object and the display screen, a vibration signal generated in the display screen is received, and a friction signal is extracted from the vibration signal. The friction signal represents that the touch object is rubbing on the surface of the display screen. The writing state between the touch object and the display screen is detected based on the friction signal. If the writing state is that the touch object is writing on the surface of the display screen, the writing state is verified based on the friction signal. In these embodiments, it analyzes the writing operation and uses the friction signal as a representation of the writing operation. The writing state is detected by analyzing the friction signal, and the writing state is verified based on the friction signal in the environment of the interactive board. This ensures the accuracy of the writing state and solves the problem of zero-height writing. This allows users to maintain the habit of using resistive or capacitive writing without having to learn new writing skills for the interactive board, thereby reducing the cost of using writing on the interactive board.

Secondly, the infrared sensors may be designed to protrude, which reduces or avoids requirements of recessing the infrared sensor in the interactive board, reduces or avoids a concave structure in the interactive board (such as the glass and back panel of the display), reduces costs and manufacturing complexity. Since the infrared sensors can maintain the touch area and the scanned information, it may ensure the precision of touch detection.

### BRIEF DESCRIPTION OF THE DRAWINGS

FIG.1A is an example diagram of triggering a touch operation on an interactive board;
FIG.1B is a partial enlarged view of an interactive board;
FIG.1C is an example diagram of writing on an interactive board;
FIG.2 is a schematic diagram of the layout of infrared sensors on an interactive board;
FIG.3 is a flow chart of a writing verification method according to Embodiment 1 of the present disclosure;
FIG.4 is an example diagram of triggering a touch operation on an interactive board according to Embodiment 1 of the present disclosure;
FIG.5A is an exemplary diagram of a tapping according to Embodiment 1 of the present disclosure;
FIG.5B is an exemplary diagram of a friction according to Embodiment 1 of the present disclosure;
FIG.6 is a time-frequency comparison diagram of a vibration according to Embodiment 1 of the present disclosure;
FIGS.7A, 7B and 7C are exemplary diagrams of writing on an interactive board according to Embodiment 1 of the present disclosure;
FIG.8 is a flow chart of a writing verification method according to Embodiment 2 of the present disclosure;
FIG.9 is a spectrum diagram of a touch signal according to Embodiment 2 of the present disclosure;
FIGS.10A and 10B are exemplary diagrams of an operation related to writing according to Embodiment 1 of the present disclosure;
FIG.11 is a structural schematic diagram of a writing verification device according to Embodiment 3 of the present disclosure;
FIG.12 is a structural schematic diagram of an interactive board according to Embodiment 4 of the present disclosure;
FIG.13 is a structural schematic diagram of an interactive board according to Embodiment 4 of the present disclosure.

### DESCRIPTION OF THE PREFERRED EMBODIMENTS

In order to make the objectives, technical solutions and advantages of the present disclosure more clear, embodiments of the present disclosure would be further described in detail below with reference to the accompanying drawings.

It should be understand that the described embodiments are only some embodiments of the present disclosure, not all embodiments. Based on the embodiments of the present disclosure, all other embodiments obtained by ordinary technicians in this field without creative work are within the scope of protection of the present disclosure.

When the following description refers to the drawings, unless otherwise indicated, the same numbers in different drawings represent the same or similar elements. The implementations described in the following exemplary embodiments do not represent all implementations consistent with the present disclosure. Instead, they are only examples of devices and methods consistent with some aspects of the present disclosure as detailed in the attached claims.

In the description of the present disclosure, it should be understood that the terms "first", "second", "third", and the like, are only used to distinguish similar objects, and are not necessarily used to describe a specific order or sequence, nor can they be understood as indicating or implying relative importance. For those of ordinary skilled in the art, the specific meanings of the above terms in the present disclosure can be understood according to the specific circumstances. In addition, in the description of the present disclosure, unless otherwise specified, "multiple" refers to two or more. "And/or" describes the association relationship of associated objects, which indicates that there have three relationships. For example, A and/or B can represent: only A, both A and B, and only B. The character "/" generally represents that the objects associated before and after are in an "or" relationship.

The hardware part of the interactive board is composed of a display screen, an intelligent processing system and so on, which are combined together by the overall structural parts and supported by a dedicated software system. The following is an analysis of the display screen, the intelligent processing system and so on.

### 1. Display screen

In practical applications, display screens include light emitting diode (LED) display screens, organic light-emitting diode (OLED) display screens, liquid crystal display (LCD) display screens, and so on. By configuring infrared sensors on both sides of the surface of the display screen, an infrared touch display screen may be formed. The infrared sensor can use infrared light to scan touch objects (such as user's fingers, stylus, and the like) on the surface of the display screen. It can be understood that in order to protect the display screen from being scratched by touch objects, a glass cover plate would be provided in the display screen. Therefore, in the embodiments of this description, the surface of the display screen may refer to the surface of the glass cover plate of the display screen.

When the touch object touches the display screen and triggers an interface on the display screen, operations such as positioning are performed to control the intelligent processing system.

Furthermore, the infrared sensor includes an infrared transmitter and an infrared receiver. The infrared transmitter is configured to transmit infrared light, and the infrared receiver is configured to receive infrared light and process the received infrared light to obtain touch data.

The display screen is installed with a frame having a circuit board. The function of the frame is to arrange infrared transmitters and infrared receivers around the display screen to form a horizontal and vertical cross beam grid. The touch point is located by using the dense infrared light signals in different directions to form a beam grid.

Furthermore, when the touch object blocks the infrared light, the intensity of the infrared light would be weakened at the corresponding infrared receiver. Therefore, the position (coordinates) of the touch point on the display screen may be determined by analyzing the touch data.

Generally, the infrared transmitter is installed on the first side of the frame of the display screen, and the infrared receiver is installed on the second side of the frame of the display screen. The first side is opposite to the second side, that is, the infrared receiver is within the scanning range of the infrared transmitter, so that the infrared light emitted by the infrared transmitter is received by the infrared receiver.

In response to different business requirements, the display screen may have different shapes, such as rectangular, hexagonal, circular, and the like. The shape of the frame also varies with the shape of the display screen, such as rectangular, hexagonal, circular, and the like. For frames of different shapes, the settings of the infrared transmitter and infrared receiver in each infrared module are also different.

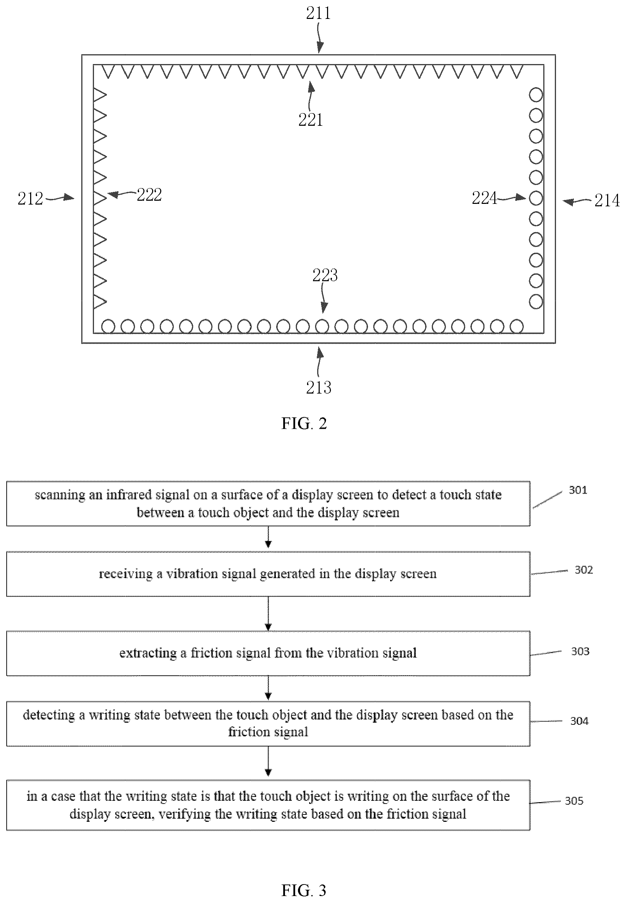

In an example, as shown in FIG.2, the shape of the frame of the interactive board is rectangular. In this example, the frame of the interactive board includes a first side 211, a second side 212, a third side 213, and a fourth side 214, where the first side 211 is opposite to the third side 213 in the vertical direction, and the second side 212 is opposite to the fourth side 214 in the horizontal direction. In this regard, the first side 211 is also called the top side, the third side 213 is also called the bottom side, the second side 212 is also called the left side, and the fourth side 214 is also called the right side.

A set of infrared transmitters 221 are disposed on the first side 211, and a set of infrared receivers 223 are disposed on the third side 213.

Another set of infrared transmitters 222 are disposed on the second side 212, and another set of infrared receivers 224 are disposed on the fourth side 214.

The interactive board is equipped with a processor (Display Controllers) that matches the infrared sensor, which is referred to as a touch controller. Its computing performance is relatively low, such as 811SOC (System on Chip). The touch controller can provide touch processing functions, that is, the touch controller can process the infrared light scanned by the infrared sensor to form touch data.

It should be noted that the touch controller may be set in the same board as the infrared sensor, or it may be set in other boards independent of the board where the infrared sensor is located. In this case, the board where the infrared sensor is located is electrically connected to the board where the touch controller is located, so that the infrared sensor is electrically connected to the touch controller. This embodiment does not limit this.

In some cases, the interactive board may omit the touch controller, in which cases the touch processing function is handed over to the host controller of the intelligent processing system.

### 2. Intelligent processing system

The intelligent processing system includes a host controller, which is the processor of the interactive board. The built-in software of the host controller can realize different functional applications, display images on the display screen, and create vivid audio and video effects.

The host controller is a higher-performance computing module.

For example, the host controller may be an Android module, which can install the Android system and configure components such as central processing unit (CPU), graphics processing unit (GPU), random access memory (RAM) and read-only memory (ROM). For example, for Android 7.0 version, the CPU is dual-core A72 and quad-core A53, the GPU is Mali T860, the RAM is 4GB, the ROM is 32GB, and so on.

For another example, the host controller may be a personal computer (PC) module, which is equipped with components such as CPU, GPU, memory, and hard disk. For example, for a plug-in Intel Core series modular computer, the CPU is Intel Core i5/i7, the GPU is Intel HD Graphics, the memory is DDR4 8G/16G, and the hard disk is 128G/256G.

In order to better understand the touch height, further explanation is given in conjunction with FIG.1A. The infrared sensor 120 generally protrudes from the surface of the display screen 110. When emitting or receiving infrared light, there is a certain height, thereby forming a touch area in the vertical direction, and its height is H. When the touch object is pressed or lifted, there may be a situation where the touch object is located within the touch area but does not touch the surface of the display screen 110. At this time, the touch point data would still be reported, the corresponding writing operation would be performed, and the writing handwriting of the touch object would be displayed.

From state 131, state 132 to state 133, it describes the stage of touch object being pressed.

In state 131, the touch object is above the touch area, and would not block the infrared light, and would not generate touch data, so the touch point would not be reported.

In state 132, the touch object is in the touch control area, close to the surface of the display screen 110 but does not touch the surface of the display screen 110, and the infrared light would be blocked and touch data would be generated, so the touch point would be reported.

In state 133, the touch object is in the touch control area and has touched the surface of the display screen 110, at which time the infrared light would be blocked and touch data would be generated, so the touch point would be reported.

From state 133, state 134 to state 135, it describes the stage of the touch object being lifted.

In state 134, the touch object is within the touch control area, close to the surface of the display screen 110 but does not touch the display screen 110, and at this time, the infrared light would be blocked, touch data would be generated, and therefore, the touch point would be reported.

In state 135, the touch object is above the touch area, and would not block the infrared light, and would not generate touch data, so the touch point would not be reported.

That is, when infrared sensors are used to implement writing operations on an interactive board, there would be a touch height, which can easily lead to problems such as connected strokes.

Since the touch devices used by users in daily life are mostly mobile phones and tablets, these touch devices usually apply resistive or capacitive touch operations, so users are more accustomed to using resistive or capacitive touch operations, that is, the touch point would be reported and the corresponding operation would be performed only when the surface of the display screen is touched.

When users maintain the habit of using capacitive touch operations, triggering an optical touch operation may result in inferior performance in certain business scenarios.

Taking handwriting as an example, when a user writes on the display screen, the handwriting would be displayed when the finger is in the touch area of the infrared sensor but does not touch the display screen. However, the user may be starting or putting down the pen at this time and does not intend to write. Displaying the handwriting of starting and putting down the pen would result in connected strokes, and the handwriting would appear rather sloppy.

For example, as shown in FIG.1C, if the user writes " 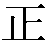 ", there is a continuous start and end stroke 141 between the first horizontal and the first vertical, there is a start stroke 142 at the end of the second horizontal, and there is a continuous start and end stroke 143 between the second and the third horizontal, and there are obvious connected strokes.

There are currently two main solutions for solving this technical problem:
1. Reduce the writing height as much as possible by reducing the height of the infrared sensor protruding from the display surface.
2. By setting a piezoelectric sensor on the stylus, when the stylus touches the surface of the display screen, the stylus would generate pressure data, thereby achieving zero writing height.

However, in the above first method, even if the infrared sensor is positioned lower, it still need to protrude from the surface of the display screen, so there must be a height of the light signal, and it cannot achieve zero writing height. Moreover, this method requires the infrared sensor to be recessed in the interactive board, which necessitates a concave structure in the interactive board (such as the cover glass and back panel of the display screen) to prevent the display screen and cover glass from convexly blocking the light of the infrared sensor, which results in higher costs and greater manufacturing complexity.

In addition, the touch area of the infrared sensor is reduced to maintain the scanned information, and the accuracy of touch detection would be reduced.

In the above second method, when the touch object is not a stylus, such as the touch object is a hand, it would easily occur misoperation; and the stylus is connected to the interactive board, which occupies the limited port resources of the interactive board, and affects operations such as screen transmission and projection.

### Embodiment 1

FIG.3 is a flow chart of a writing verification method according to Embodiment 1 of the present disclosure. This embodiment is applicable to the case where the touch state detected by infrared is compared with the writing state detected by vibration. The method may be performed by a writing verification device, where the writing verification device may be implemented by software and/or hardware and may be provided in an interactive board. The method includes the following steps:
Step 301: scanning an infrared signal on a surface of a display screen to detect a touch state between a touch object and the display screen.

The interactive board may be composed of two or more physical entities, or it may be composed of one physical entity. The interactive board may control the contents displayed on the interactive board through touch technology to achieve human-computer interaction. It integrates one or more functions such as a projector, an electronic whiteboard, a screen, a sound system, a television, and a video conferencing terminal. Users may touch the interactive board with their fingers or touch objects (such as a stylus).

The interactive board is installed with applications that come with the operating system, and also installed with applications downloaded from third-party devices or servers. The types and contents of the applications may be set according to actual conditions. Usually, the application software has an electronic whiteboard function, which may be used to achieve functions such as answering questions, drawing, annotating, making courseware, and displaying and playing.

Furthermore, the interactive board has a larger screen (mostly 55 inches to 100 inches) and a higher speaker power (generally 30W to 60W). If a file is played on the interactive board, the information on the interface (such as text, image data, video data, etc.) is clear, the sound is loud, and the playback effect is better. It is suitable for corporate business scenarios and also for educational business scenarios.

The so-called suitable for enterprise and education refers to the customization of the operating system and its applications in the tablet according to the business characteristics of enterprise and education, such as conferencing, playing courseware, answering electronic exercises, and the like.

For example, writing may be done on the display screen of an interactive board, and graphics and other designs may be incorporated to meet efficient writing needs during meetings.

For example, the interactive board has built-in modules such as video, sound pickup, and sound amplification, which can support remote desktop sharing and real-time synchronization of remote writing, meeting the needs of remote collaboration and borderless office in meetings.

In the business scenario, the interactive board is powered on. Multiple infrared sensors are installed in the display screen of the interactive board. During the startup and operation of the interactive board, the infrared sensors may be activated to scan infrared light on the surface of the display screen of the interactive board. Touch objects can block infrared light, so as to detect whether there is a touch object on the surface of the display screen based on the transmission of infrared light.

The infrared sensor scans infrared light on the surface of the display screen of the interactive board within a certain effective spatial range. The touch object can block the infrared light within this spatial range. Beyond this spatial range, the infrared sensor cannot detect the touch object. Within this spatial range, the infrared sensor can detect the touch object. This spatial range is called the touch area. The touch area has a certain height in the vertical direction of the display plane of the display screen, and the height is recorded as H.

When a user triggers a touch operation, the following process generally occurs:

### 1. The process in which the touching object descends

A touch object appears on the surface of the display screen 410 of the interactive board and is in state 431, that is, the touch object does not enter the touch area of the infrared sensor 420, and the vertical distance between the touch object and the display screen 410 is greater than the height H. At this time, the infrared light is transmitted normally and is not blocked, and the touch state is that there is no touch object.

The touch object is in state 432, that is, the touch object enters the touch area of the infrared sensor 420 and approaches the surface of the display screen 410, but does not touch the display screen 410. The vertical distance between the touch object and the display screen 410 is greater than 0 and less than the height H. At this time, the infrared light is blocked by the touch object, and the touch state changes, that is, the touch object approaches or touches the surface of the display screen 410.

### 2. The process in which the touch object touches the surface of the display screen 110

The touch object is in state 433, that is, the touch object enters the touch area of the infrared sensor 420 and touches the display screen 410, and the vertical distance between the touch object and the display screen 410 is equal to 0 or less than 0 (that is, due to the pressing, the glass has an inward deformation). At this time, the infrared light is blocked by the touch object, and the touch state is maintained that the touch object is approaching or touching the surface of the display screen 410.

### 3. The process in which the touched object lifts

The touch object is in state 434, that is, the touch object leaves the display screen 410, but is still within the touch area of the infrared sensor 420 and is still close to the display screen 410. The vertical distance between the touch object and the display screen 410 is greater than 0 and less than the height H. At this time, the infrared light is blocked by the touch object, and the touch state is maintained that the touch object is approaching or touching the surface of the display screen 410.

The touch object is in state 435, that is, the touch object leaves the touch control area of the infrared sensor, and the vertical distance between the touch object and the display screen 410 is greater than the height H. At this time, the infrared light is transmitted normally and is not blocked, and the touch state changes to a state that there is no touch object.

Furthermore, there are two situations in which the touch object touches the surface of the display screen.

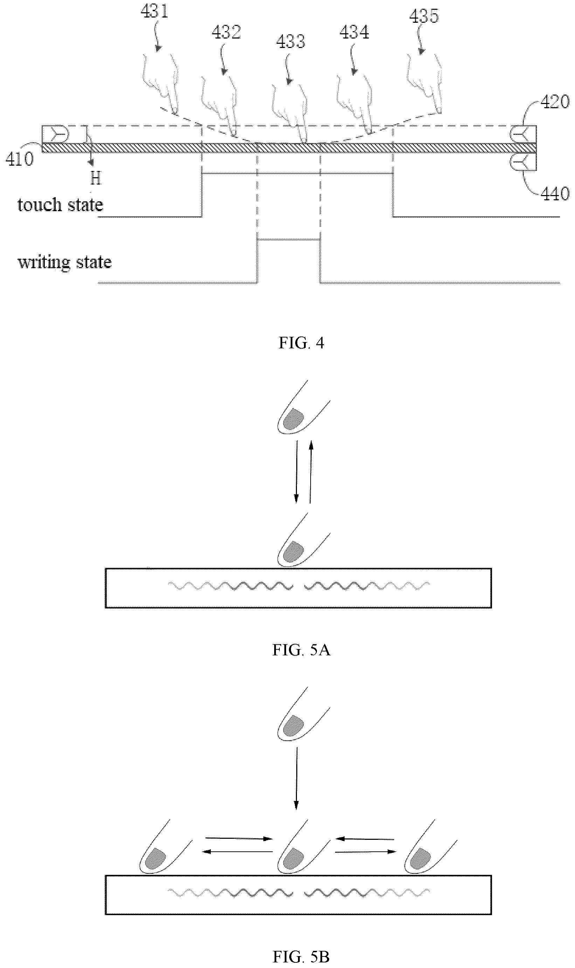

As shown in FIG. 5A, the first case is that the touch object taps the surface of the display screen, that is, the touch object descends in a vertical direction and touches the surface of the display screen, and then is lifted up for a short time. The short time may be expressed as the duration of the touch object touching the surface of the display screen that is less than or equal to a first time threshold.

As shown in FIG.5B, the second case is that the touch object rubs the surface of the display screen, that is, the touch object descends in a vertical direction, and after touching the surface of the display screen, it stays on the surface of the display screen for a long time and moves in a horizontal direction. The long time may be expressed as the duration of the touch object touching the surface of the display screen that is greater than or equal to a second time threshold, and the second time threshold is greater than the first time threshold.

Considering that writing is a continuous behavior that cannot be completed in a short period of time. Thus, during the writing operation, the touch object tapping the surface of the display screen generally occurs when the user is preparing to write, the user has just finished writing, the user uses the touch object to emphasize a certain handwriting, and the like, and but is not the user using the touch object to write handwriting. During the writing operation, the touch object rubbing on the surface of the display screen generally means that the user uses the touch object to write handwriting (such as text, lines, symbols, etc.).

Step 302: receiving a vibration signal generated in the display screen.

When a touch object touches the surface of the display screen on the interactive board, a mechanical vibration is generated, which is propagated along the structure of the interactive board.

In this embodiment, as shown in FIG.4, a vibration sensor 440 may be installed on the interactive board. The vibration sensor 440 is configured to detect a signal (i.e., a vibration signal) generated when two objects touch each other by using vibration, sound, and the like, such as an elastic wave sensor, a piezoelectric sensor, and the like.

Taking the elastic wave sensor as an example. The elastic wave sensor is a sensor that uses elastic waves to detect whether two objects are touching. Mechanical vibrations below audio frequency, sounds in the audio range, and ultrasonic waves above audio frequency are all wave phenomena of media such as gas, liquid, and solid. Compared with light and electromagnetic waves, this wave phenomenon is called elastic wave.

Furthermore, when the touch object contacts the surface of the display screen (i.e., the surface of the glass cover), the pressure causes the material particles on the surface of the display screen (i.e., the surface of the glass cover) to leave the equilibrium position, that is, when strain occurs, the particles vibrate under the action of the elastic force, and at the same time cause strain and vibration of the particles around the glass. The propagation process of the vibration formed in the elastic medium is called elastic wave. Inside the elastic wave sensor, the elastic wave generated passes through the contacted piezoelectric sensor. Since the piezoelectric sensor generates charges on the surface after being subjected to force, the charges are amplified and transformed by the amplifier and the measurement circuit to become an electrical output proportional to the external force. The charge signal is introduced into the controller, which is processed by the analog circuit in the controller and converted into a digital signal.

In this embodiment, the vibration sensor is installed at a position where may transmit the vibration (such as elastic wave signal) generated by the display screen, thereby detecting the event that the touch object touches the display screen, and is not necessarily installed at the position where the vibration (such as elastic wave signal) occurs.

In one case, the vibration sensor may be directly installed on the surface of the display screen, for example, the vibration sensor may be installed on the upper surface of the display screen, or the vibration sensor may be installed on the lower surface of the display screen, so as to receive the vibration (such as elastic wave signal) transmitted by the display screen and improve the accuracy of touch detection.

Furthermore, the vibration sensor may be installed in the frame of the display screen. On the one hand, it may avoid exposing the vibration sensor and reduces the impact on the appearance. On the other hand, there are fewer components in the frame of the display screen. Installing the vibration sensor in the frame of the display screen may reduce the impact on the internal structure (such as wiring) and reduce the common mode noise interference from the display screen.

In another case, the vibration sensor may be mounted on other components in contact with the display screen, and is configured to receive vibrations (such as elastic wave signals) occurring on the display screen and transmitted by the other components.

In addition, while maintaining accuracy, the vibration sensor detects touch within a range rather than just the area where the vibration sensor is installed. Therefore, based on the relationship between the range and the display screen of the interactive board, one or more vibration sensors may be installed on the same interactive board, so that the range of touch detection by one vibration sensor is greater than or equal to the area of the display screen, so that the range of touch detection by one vibration sensor can cover the display screen, or the range of touch detection by multiple vibration sensors after the range is combined is greater than or equal to the area of the display screen, so that the range of touch detection by multiple vibration sensors after the range is combined can cover the display screen.

The number of the vibration sensors is positively correlated with the area of the display screen, that is, the larger the area of the display screen is, the more the number of vibration sensors is, and conversely, the smaller the area of the display screen is, the fewer the number of vibration sensors is.

Step 303: extracting a friction signal from the vibration signal.

In actual applications, the touch object touching the surface of the display screen may include two operations: the touch object tapping the surface of the display screen and/or the touch object rubbing the surface of the display screen. The vibration signal generated when the touch object taps the surface of the display screen and the vibration signal generated when the touch object rubs the surface of the display screen are different in the time domain and the frequency domain, respectively.

For ease of distinction, the vibration signal generated when the touch object taps the surface of the display screen is recorded as a tapping signal, that is, the tapping signal represents that the touch object taps the surface of the display screen, and the vibration signal generated when the touch object taps the surface of the display screen is recorded as a friction signal, that is, the friction signal represents that the touch object rubs against the surface of the display screen.

In the time domain, the tapping signal appears before the friction signal. In the frequency domain, the tapping signal is in the low-frequency range and the friction signal is in the high-frequency range.

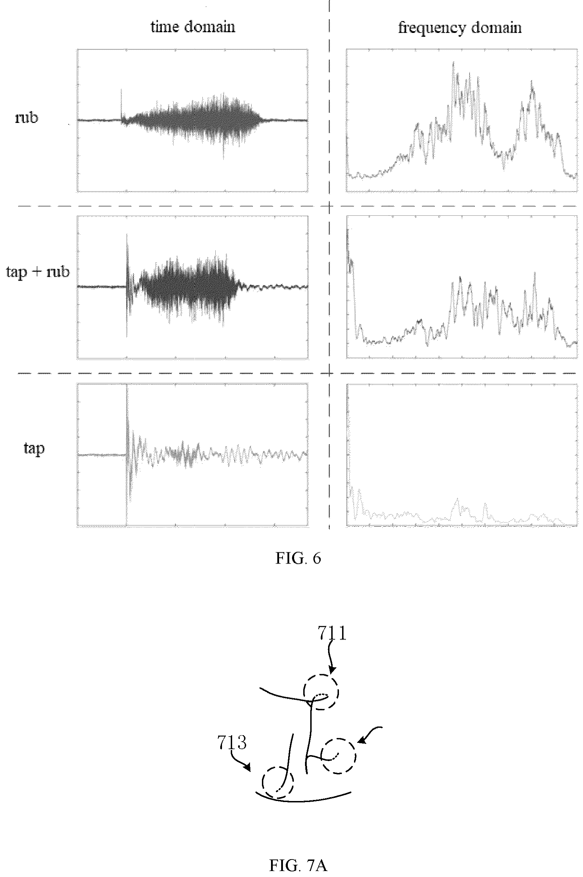

Furthermore, as shown in FIG.6, if the user taps the surface of the display screen once by a touch object without writing any handwriting, a distinct head wave would appear in the vibration signal in the time domain, and the head wave is distributed in the low-frequency range in the frequency domain.

If the user uses a touch object to write handwriting without tapping the surface of the display screen, the vibration signal would not have a distinct head wave in the time domain, and a continuous waveform would be distributed in the high-frequency range in the frequency domain.

If the user uses a touch object to both tap the surface of the display screen once and write handwriting, a distinct head wave would appear in the vibration signal in the time domain. In the frequency domain, the head wave is distributed in the low-frequency range and a continuous waveform is distributed in the high-frequency range.

Since the tapping signal does not indicate that the user is using a touch object to write, but would affect the detection of the writing state, when detecting the writing state, the useless signals such as tapping and background (noise) may be filtered out from the vibration signal based on the characteristics of the tapping signal and the friction signal, thereby extracting the friction signal.

In a method of extracting friction signals, a high-pass filter may be set in the interactive board. The high-pass filter may be software and/or hardware. The vibration signal is input into the high-pass filter, and the high-pass filter performs high-pass filtering or first band-pass filtering on the vibration signal, thereby filtering out the tapping signal, the background signal, and the remaining friction signal, where the background signal represents that there is no touch object tapping or rubbing the surface of the display screen.

High-pass filtering is a filtering method, also known as low-cut filtering. The rule is that high-frequency signals can pass normally, while low-frequency signals below the set critical value are blocked and weakened. The degree of blocking and weakening would be set based on the frequencies of the tapping signal and background signal, and different filtering procedures (which is used for detecting writing state).

A first band-pass filtering is a process that permits the passage of the frequency components within a certain frequency range (i.e., the passband) while attenuating the frequency components in other ranges to an extremely low stage.

Furthermore, a first signal amplifier may be provided in the interactive board. The first signal amplifier may be software and/or hardware. The friction signal is input into the first signal amplifier. A first gain processing is performed on the friction signal to increase the difference between the friction signal and the background signal. Increasing the difference between the friction signal and the background signal can ensure that the friction signal is highlighted and the background signal is suppressed, thereby improving the accuracy of detecting the writing state.

Exemplarily, a first gain processing is a high-multiple gain. Taking into account that the friction signal is related to the friction coefficient of the display surface and the contact area on the display surface, and the writing state is that the touch object writes on the surface of the display screen and the touch object does not write on the surface of the display screen, that is, the writing state is independent of the magnitude of the friction. Then, whether the friction signal is distorted has nothing to do with the accuracy of detecting the writing state. Therefore, it may determine a multiplier that is independent of the distortion, and this multiplier may distinguish the friction signal from the background signal, such as 1000 times, 2000 times, and the like, so that the first gain processing is performed on the friction signal based on the multiplier to increase the difference between the friction signal and the background signal.

Step 304: detecting a writing state between the touch object and the display screen based on the friction signal.

The friction signal may be used to indicate the friction of the touch object on the surface of the display screen. The friction signal extracted from the vibration signal may be a signal generated when the user touches the interactive board or the bracket on which the interactive board is suspended, or when the user walks and causes the bracket on which the interactive board is suspended to shake. It may also be a signal generated when the user uses the touch object to write handwriting (such as text, lines, symbols, etc.) on the surface of the display screen. Therefore, in this embodiment, it may analyze the properties of the friction signal, detect the writing state between the touch object and the display screen (indicating the state of the touch object writing handwriting on the surface of the display screen), and thus determine whether the touch object writes handwriting on the surface of the display screen.

In a detection method, a threshold value may be set in advance for the friction signal (especially the friction signal after the first gain processing) to determine whether the friction signal is greater than the threshold value.

If yes (i.e., the friction signal is greater than the threshold value), it represents that the friction signal is valid, and it is determined that the writing state between the touch object and the display screen is that the touch object writes on the surface of the display screen. For example, as shown in FIG. 4, the touch object can record the writing state as the touch object writing on the surface of the display screen in state 433.

If not (i.e., the friction signal is less than or equal to the threshold value), it represents that the friction signal is invalid, and it is determined that the writing state between the touch object and the display screen is that the touch object is not writing on the surface of the display screen. For example, as shown in FIG. 4, the touch object can record the writing state as the touch object is not writing on the surface of the display screen in states 431, 432, 434, and 435.

Furthermore, the characteristics of the friction signal in the time domain and the frequency domain are similar. Therefore, the writing state may be detected in the time domain as well as in the frequency domain, which is not limited in this embodiment.

Then, in the time domain, it may determine a threshold value set for the time domain, so as to judge in the time domain whether the friction signal is greater than the threshold value.

Alternatively, in the frequency domain, it may determine a threshold value set for the frequency domain, and the friction signal may be converted from the time domain to the frequency domain by means of Fourier Transform (FT) or Fast Fourier Transform (FFT), so as to determine in the frequency domain whether the friction signal is greater than the threshold value.

Furthermore, threshold values such as threshold values in the time domain and threshold values in the frequency domain may include but are not limited to root mean square, peak-to-peak value, effective value, slope, slope change rate, and the like.

Step 305: in a case that the writing state is that the touch object is writing on the surface of the display screen, verifying the writing state based on the friction signal.

When the user continuously taps the interactive board or the bracket on which the interactive board is suspended, there would still be errors in detecting the writing state by using friction signals. In order to improve the accuracy of the writing state, the writing state may be verified by using the touch state based on infrared signal detection.

Generally, the infrared sensor scanning infrared signals is a continuous operation, that is, the infrared sensor may continuously generate multiple frames of touch state within a period of time. During this period of time, the multiple frames of touch state may be continuous or intermittent, and this embodiment does not limit this.

In addition, the vibration sensor detecting the writing state is also a continuous operation, that is, the vibration sensor can continuously generate multiple frames of writing state within a period of time.

Since the touch object is singular, the user writing on the surface of the display screen using the touch object is a specific action performed by a specific object. Therefore, during the period of time, it may find the writing state and the touch state that are synchronized in time.

If the current frame of the writing state is that the touch object is not writing on the surface of the display screen, the writing state and the touch state of the current frame are ignored.

If the current frame of the writing state is that the touch object writes on the surface of the display screen, the current frame of the writing state may be further verified by using the touch state.

As shown in FIG.4, in state 432 and state 434, that is, the touch object is located within the touch area of the infrared sensor 420 but does not touch the surface of the display screen 410. At this time, the infrared sensor 420 records the touch state of the touch object as approaching or touching the surface of the display screen 410, and the vibration sensor 440 does not generate a friction signal for the touch object. In state 433, that is, the touch object is located in the touch area of the infrared sensor 420 and touches the surface of the display screen 410. If the user uses the touch object to write on the surface of the display screen 410, at this time, the infrared sensor 420 records the touch state of the touch object as approaching or touching the surface of the display screen 410, and the vibration sensor 440 generates a friction signal for the touch object.

Therefore, if the writing state is that the touch object writes on the surface of the display screen, and the touch control state is that the touch object approaches or touches the surface of the display screen, it is determined that the writing state is valid.

If the writing state is that the touch object writes on the surface of the display screen, and the touch control state is that no touch object approaches or touches the surface of the display screen, then it is determined that the writing state is invalid.

As shown in FIG.7A, if the user uses a touch pen to write the word " 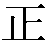 ", the handwriting generated during the writing corresponds to the valid writing state (displayed as a solid line) and the no-writing state (displayed as a dotted line). It can be seen that there are continuous starting and ending strokes 711 between the writing of the first horizontal and the first vertical, there is a starting stroke 712 at the end of writing the second horizontal, and there are continuous starting and ending strokes 713 between the writing of the second vertical and the third horizontal. There are obvious connected strokes, and the touch data corresponding to these connected strokes mostly correspond to the no-writing state (displayed as a dotted line).

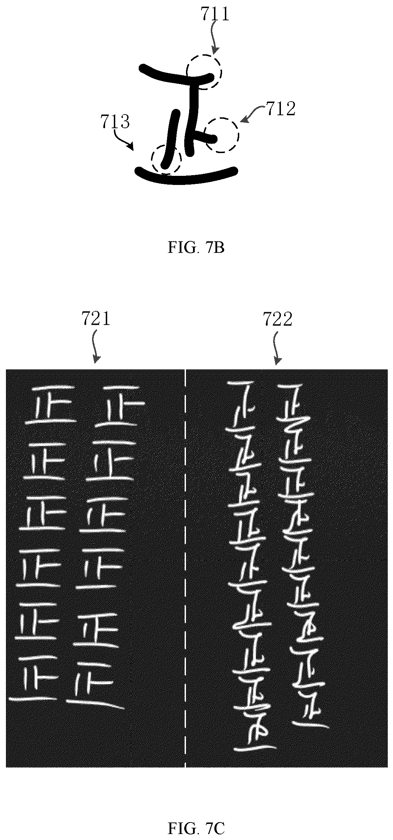

As shown in FIG.7B, in response to a valid writing state (displayed as a solid line), the corresponding handwriting is drawn, and the non-writing state (displayed as a dotted line) is ignored and the corresponding handwriting is not drawn. At this time, the continuous starting and ending strokes 711 between the first horizontal and the first vertical, the starting stroke 712 at the end of the second horizontal, and the continuous starting and ending strokes 713 between the second and the third horizontal can all be eliminated to eliminate the obvious connected strokes, making the " 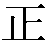 " stroke more neat.

Further, as shown in FIG.7C, in area 721, the method of this embodiment is applied to respond to the valid writing state (displayed as a solid line) and draw the corresponding handwriting, ignore the no-writing state (displayed as a dotted line) and do not draw the corresponding handwriting, and write multiple " 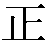 " characters. In area 722, the prior technology is applied to directly respond to the touch data and draw the corresponding handwriting, and write multiple " 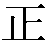 " characters.

By comparison, it can be seen that the number of connected strokes in the multiple " 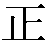 " characters in area 721 has been greatly reduced, and the overall appearance is more neat, while the number of connected strokes in the multiple " 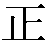 "characters in area 722 is more obvious, and the overall appearance is more sloppy.

In this embodiment, an infrared signal is scanned on the surface of the display screen to detect the touch state between the touch object and the display screen, a vibration signal generated in the display screen is received, and a friction signal is extracted from the vibration signal. The friction signal represents that the touch object is rubbing on the surface of the display screen. The writing state between the touch object and the display screen is detected based on the friction signal. If the writing state is that the touch object is writing on the surface of the display screen, the writing state is verified based on the friction signal. This embodiment analyzes the writing operation and uses the friction signal as a representation of the writing operation. The writing state is detected by analyzing the friction signal, and the writing state is verified based on the friction signal in the environment of the interactive board. This ensures the accuracy of the writing state and solves the problem of zero-height writing. This allows users to maintain the habit of using resistive or capacitive writing without having to learn new writing skills for the interactive board, thereby reducing the cost of using writing on the interactive board.

Secondly, the infrared sensor can maintain a protruding setting, which reduces or avoids the requirements of burying the infrared sensor in the interactive board, reduces or avoids the requirements of concave structure of the interactive board (such as the glass and back panel of the display), reduces costs and management difficulties. Since the infrared sensor can maintain the touch area, the amount of information scanned can be maintained, thereby maintaining the accuracy of touch detection.

### Embodiment 2

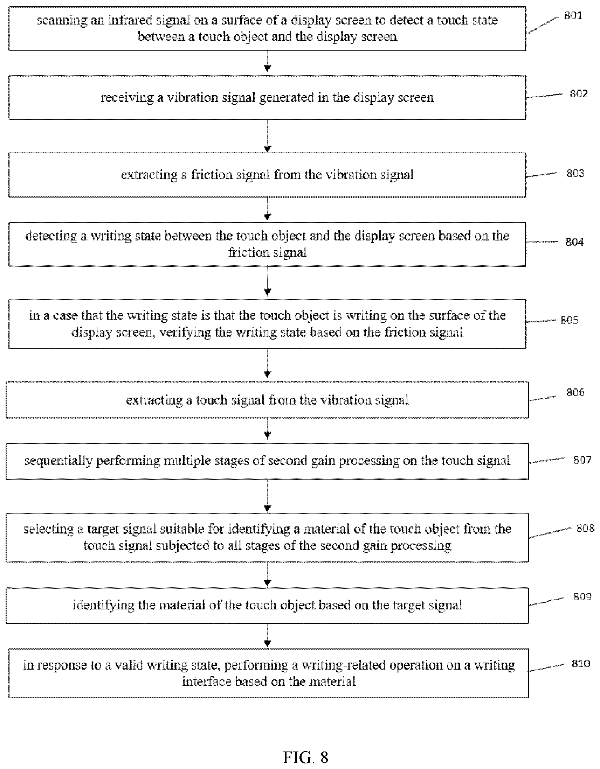

FIG.8 is a flow chart of a writing verification method according to Embodiment 2 of the present disclosure. This embodiment is based on the previous embodiment and further adds an operation of identifying the material of the touch object. The method includes the following steps:
Step 801: scanning an infrared signal on a surface of a display screen to detect a touch state between a touch object and the display screen.

Step 802: receiving a vibration signal generated in the display screen.

Step 803: extracting a friction signal from the vibration signal, where the friction signal represents that the touch object rubs the surface of the display screen.

Step 804: detecting a writing state between the touch object and the display screen based on the friction signal.

Step 805: in a case that the writing state is that the touch object is writing on the surface of the display screen, verifying the writing state based on the friction signal.

Step 806: extracting a touch signal from the vibration signal.

Generally, a vibration signal may include a tapping signal and a friction signal, where the tapping signal represents that a touch object taps the surface of the display screen. Since the tapping signal and the friction signal indicate that a user uses a touch object to touch the surface of the interactive board, when detecting the material of the touch object, useless signals such as background (noise) may be filtered out from the vibration signal based on the characteristics of the tapping signal and the friction signal, thereby extracting a touch signal, where the touch signal includes a friction signal and a tapping signal.

Since the touch signal reaches the vibration sensor first, the touch signal can be extracted first to detect the material of the touched object, ensuring real-time performance.

In a method of extracting a touch signal, the interactive board may be provided with a low-pass filter, where the low-pass filter may be software and/or hardware. The vibration signal is input into the low-pass filter, and the low-pass filter performs a low-pass filtering process or a second band-pass filtering process on the vibration signal to obtain a touch signal.

Low-pass filter is a type of filtering, also known as high-cut filter. The rule is that low-frequency signals can pass normally, while high-frequency signals that exceed the set threshold value are blocked or weakened. The degree of blocking or weakening would vary based on the different frequencies of the touch signals and different filtering procedures (detecting the material of the touch object).

A second band-pass filtering is a process that permits the passage of the frequency components within a certain frequency range (i.e., the passband) while attenuating the frequency components in other ranges to an extremely low stage.

Generally, high-pass filtering or first band-pass filtering is opposite to low-pass filtering or second band-pass filtering.

Step 807: sequentially performing multiple stages of second gain processing on the touch signal.

When detecting the material of a touch object, the characteristics of the touch signal would be used. Generally, different specifications are set for the touch signal. Therefore, in this embodiment, multiple stages of second signal amplifiers can be provided. Each second signal amplifier can be software and/or hardware. The models of the multiple stages of second signal amplifiers can be the same or different, and this embodiment does not limit this.

Multiple stages of second signal amplifiers are connected in sequence, and each stage of the second signal amplifier completes respective stage of the second gain processing, that is, the input of the first stage of second signal amplifier is the touch signal extracted from the vibration signal, which is configured to perform the first stage of second gain processing on the touch signal, and the input of the n-th stage (n is a positive integer, n≥2) second signal amplifier is the touch signal output by the n-1-th stage of second signal amplifier, which is configured to perform the n-th stage of second gain processing on the touch signal.

Then, in this embodiment, the touch signal may be processed with multiple stages of second gain in sequence by the plurality of second signal amplifiers, so as to select a target signal suitable for identifying the material of the touch object.

In an implementation, step 807 may include the following steps:
Step 8071, determining whether all stages of the second gain processing are completed; if not, performing step 8072; if yes, performing step 8074.

Step 8072, determining the touch signal for the current stage.

In this embodiment, the second signal amplifiers may be traversed in the order of multiple stages of second signal amplifiers, and each stage of the touch signal may be determined for each stage of the second signal amplifier.

At the current moment, the second signal amplifier with the smallest number of stages is selected from the remaining second signal amplifiers to locate the current stage, thereby determining the touch signal for the current stage.

When the current stage is the first stage, the touch signal for the current stage is a touch signal extracted from the vibration signal.

When the current stage is not the first stage, the touch signal for the current stage is the touch signal subjected to the previous stage of second gain processing.

Step 8073, performing the current stage of the second gain processing on the touch signal for the current stage, and returning to perform step 8071.

For the current stage of second signal amplifier, a specified multiplier can be set, and the current stage of the second gain processing is performed on the touch signal for the current stage based on the multiplier.

The multiplier of each stage of the second gain processing may be the same or different, and this embodiment does not impose any limitation on this.

Exemplarily, the multiplier of the second gain processing decreases along the stage number, that is, the lower the stage of the second signal amplifier and the lower the stage of the touch signal, the greater the multiplier of the second gain processing; conversely, the higher the stage of the second signal amplifier and the higher the stage of the touch signal, the smaller the multiplier of the second gain processing; for example, the multiplier of the first stage of the second gain processing is 100, the multiplier of the second stage of the second gain processing is 50, and the multiplier of the third stage of the second gain processing is 10.

The larger the multiplier of the second gain processing is, the larger the amplitude of the second gain processing is, and the greater the probability of distortion is. By decreasing the multiplier of the second gain processing along the stage number, the amplitude of the second gain processing can be reduced along the stage number, reducing the probability of distortion, making it easier to find a touch signal with the maximum gain when it is non-distorted.

Step 8074: outputting the touch signal subjected to each stage of the second gain processing.

When all stages of the second gain processing are completed, the touch signal subjected to each stage of the second gain processing may be output, so as to find a suitable touch signal to detect the material of the touch object.

Step 808: selecting a target signal suitable for identifying a material of the touch object from the touch signal subjected to all stages of the second gain processing.

In this embodiment, the touch signal subjected to all stages of the second gain processing may be compared with each other, and a standard touch signal that meets the material of the detected touch object may be selected as the target signal.

In an implementation, when detecting the material of a touch object, the properties of a touch signal are usually used, and whether the touch signal is distorted has a more obvious impact on this. Therefore, an undistorted candidate signal can be selected from the touch signal subjected to all stages of second gain processing, and the candidate signal with the highest stage number is selected as the target signal, that is, the target signal is an undistorted touch signal with the largest gain amplitude, thereby improving the accuracy of material detection.

In an example, two stages of second signal amplifiers are set in an interactive board, a touch signal is input into the first stage of the second signal amplifier, the first stage of the second signal amplifier performs the first stage of second gain processing on the touch signal, the touch signal subjected to the first stage of second gain processing is input into the second stage of the second signal amplifier, the second stage of the second signal amplifier performs the second stage of second gain processing on the touch signal, and outputs the touch signal subjected to the first stage of second gain processing and the touch signal subjected to the second stage of second gain processing.

If the touch signal subjected to the second stage of second gain processing is distorted, the touch signal subjected to the first stage of second gain processing is the target signal.

If the touch signal subjected to the second stage of the second gain processing is not distorted, the touch signal subjected to the second stage of the second gain processing is the target signal.

Step 809: identifying the material of the touch object based on the target signal.

In actual applications, the materials of touch objects such as fingers, markers, and chalks are different, which makes the vibration characteristics of different materials of touch objects different. By collecting the target signal of the current touch object, the material of the touch object can be analyzed through deep learning, machine learning, rules, target signal comparison, and the like.

For the tapping signal, the frequency of the tapping signal is related to the equivalent stiffness coefficient of the material. The higher the stiffness of the material, the higher the frequency of the tapping signal. Conversely, the lower the stiffness of the material, the lower the frequency of the tapping signal. By performing time-frequency analysis on the tapping signal, the hardness of the touch object can be calculated, thereby identifying what material the touch object is made of.

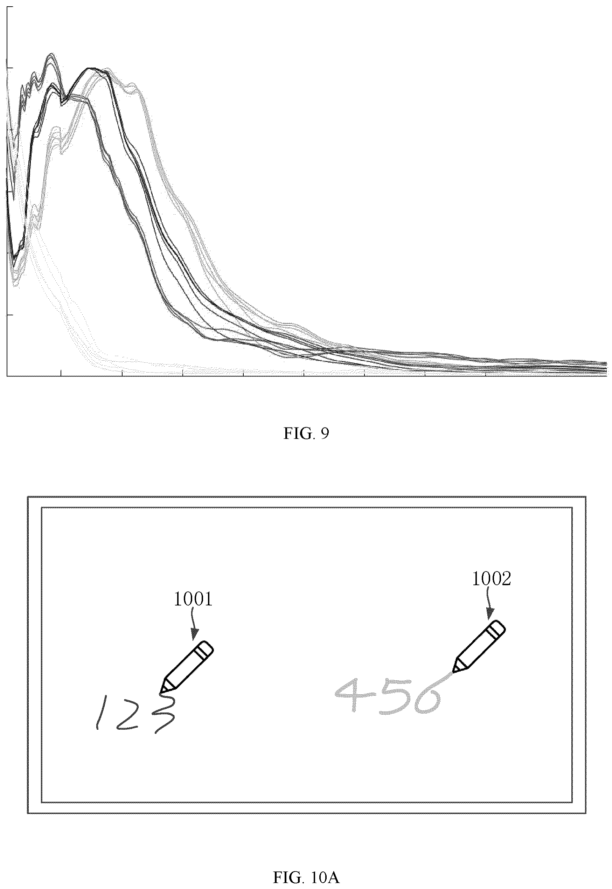

In an example, the target signal is converted from the time domain to the frequency domain by FT, FFT, and the like. As shown in FIG.9, for different materials of touch objects, the characteristics of the spectrograms are more significant, and the spectrograms of the same material of touch objects are clustered, and the center frequency is significant.

Therefore, in the frequency domain, the center frequency of the target signal is calculated, and for the sake of distinction, the center frequency is recorded as the target center frequency.

The band-pass and band-stop filters each have two half-power points. The center of these two points is called the center frequency. In logarithmic coordinates, it is the midpoint between two m (m is a positive number, such as 3) dB points, and is generally expressed by the arithmetic average of the two mdB points.

In this example, the center frequencies of different materials of touch objects may be marked in advance. For easy distinction, the center frequencies are recorded as sample center frequencies, that is, the sample center frequencies are associated with materials. Then, for the current touch object, the differences between the target center frequency and multiple sample center frequencies can be calculated, and the material corresponding to the sample center frequency with the smallest difference is set as the material of the touch object.

The center frequency of the frequency spectrum of different materials of touch objects is significant, which can ensure the accuracy of material detection based on the center frequency. In addition, the calculation of the center frequency is simple and the calculation amount of material detection is low, which can ensure the real-time detection of the material.

Step 810: in response to a valid writing state, performing a writing-related operation on a writing interface based on the material.

In the interactive board, the user triggers the writing mode. At this time, in the writing mode, an interface can be displayed on the display screen, which is recorded as the writing interface. Generally, the user can select the configuration parameters of the handwriting, such as color, width, and the like, and then write handwriting on the interface according to the configuration parameters, thereby improving the convenience of the writing operation.

In actual applications, the writing interface may be an independent interface. For example, the interactive board provides an electronic whiteboard. The user triggers a control operation to display the electronic whiteboard in the interactive board. The interactive board receives the control operation and displays the electronic whiteboard as a writing interface. At this time, the user can trigger a touch operation on the electronic whiteboard. The touch operation is represented by a trajectory, so it can be called a touch trajectory. The interactive board can display handwriting corresponding to the touch trajectory on the screen of the interactive board, where the control operation to display the electronic whiteboard includes but is not limited to touch operation, keyboard operation, mouse operation, and physical button operation.

In addition, the writing interface can also be an interface with a background. For example, the interactive board displays local courseware, screen images belonging to source devices (such as laptops, etc.) transmitted by a screen transmission device (USB Dongle, USB software protector), and other data. The user triggers an annotation operation in the interactive board, and the interactive board receives the annotation operation, freezes the courseware, screen images and other data, and makes them the background, that is, maintains the current frame of the courseware, screen images and other data, and generates a mask on the courseware, screen images and other data, thereby serving as a writing interface.

The so-called courseware may refer to a course document produced according to teaching requirements, after determining teaching objectives, analyzing teaching content and tasks, and designing teaching activity structures and interfaces. For example, the courseware may be a file in a public format such as a Word document or PPT (PowerPoint, presentation), or it may be a custom page composed of elements such as text, tables, and pictures, and this embodiment does not impose any restrictions on this.

In the interactive board, touch objects of one or more materials can be configured. The same touch object can include one material or multiple materials. Each material can be configured with a writing style. These touch objects can be configured by the manufacturer of the interactive board or by the user. This embodiment does not limit this.

If the writing state is verified to be valid, it means that the user is writing. At this time, writing-related operations can be performed on the writing interface according to the writing style corresponding to the material.

In an implementation, a user may use a touch object to trigger a touch track on the surface of the interactive board's display screen. In scenarios such as education and meetings, there may be multiple people answering exercises at the same time, or multiple people recording meeting minutes at the same time. At this time, multiple (at least two) touch objects simultaneously trigger touch operations for writing at different positions. The touch operations are mostly represented in the form of tracks, which can be called touch tracks. Therefore, the interactive board can receive the touch tracks triggered by each touch object moving on the surface of the display screen.

In the process of detecting the touch track triggered by the touch object, a touch data packet is generated. The touch point data included in the touch data packet includes at least one of the following items: state, touch ID, X coordinate, Y coordinate, width, height.

In this example, the data format of the touch data packet is as follows:

| State | Contact ID | X (LSB) | X (MSB) | Y (LSB) | Y (MSB) | W (LSB) | W (LSB) | H (MSB) | H (MSB) |
|---|---|---|---|---|---|---|---|---|---|
| state | Touch ID | X coordinate | | Y coordinate | | width | | height | |

On the one hand, after the upper-layer application receives the touch data packet, it can analyze the touch data packet and read the X-coordinate, Y-coordinate and other data representing the touch track. On the other hand, after the upper-layer application receives the configuration information, it can analyze the writing style associated with the material and perform writing-related operations according to the writing style while moving along the touch track.

Configuration information for writing can be preset for the touch object. The configuration information represents the writing style and can be set by default when the interactive board leaves the factory or can be set by the user. In addition, the configuration information can be effective for all applications of the interactive board, for a specified application of the interactive board, or for a specified user (represented by a user ID). This embodiment does not impose any restrictions on this.

Furthermore, writing tools and operating parameters may be recorded in the configuration information, and thus, the writing tools and operating parameters associated with the identifiers may be read from the configuration information, where the writing tools may refer to tools used for writing, such as pens, erasers, and the like, and the operating parameters may refer to parameters for using the writing tools.

In an example, if the writing tool is a pen, the operation parameter includes at least one of the following: the color of the handwriting (such as red, blue, black, green, etc.), the width of the handwriting (such as 1 pound, 2 pounds, etc.).

In another example, if the writing tool is an eraser, the operating parameter includes at least one of the following: erasing width, erasing type.

The erasing type includes erasing the handwriting in the area where the eraser passes, and erasing the entire handwriting.

The above-mentioned writing tools and their operating parameters are only used as examples. When implementing the embodiments of the present disclosure, other writing tools and their operating parameters can be set according to actual conditions. For example, for a pen, its operating parameters include whether it has a shadow, dotted line type, rounded corner size, transparency, and the like, and the embodiments of the present disclosure do not limit this. In addition, in addition to the above-mentioned writing tools and their operating parameters, those skilled in the art can also use other writing tools and their operating parameters according to actual needs, and the embodiments of the present disclosure do not limit this.

At this time, the writing-related operations can be performed on the writing interface along the touch track and by simulating the writing tool according to the operation parameters.

In the process of moving along the touch track, the writing tool can be simulated to perform the operations that the writing tool can present according to the corresponding operation parameters.

In an example, if the writing tool is a pen, the handwriting is displayed on the writing interface along the touch track according to the operation parameters.

In another example, if the writing tool is an eraser, the handwriting is erased along the touch track on the writing interface according to the operation parameters.

In yet another example, if the writing tool is a selection tool, an element (such as handwriting, a picture, an icon, a table, etc.) is selected along the touch track on the writing interface.

The above examples may be applied to different touch objects separately or to the same touch object, and this embodiment does not limit this.

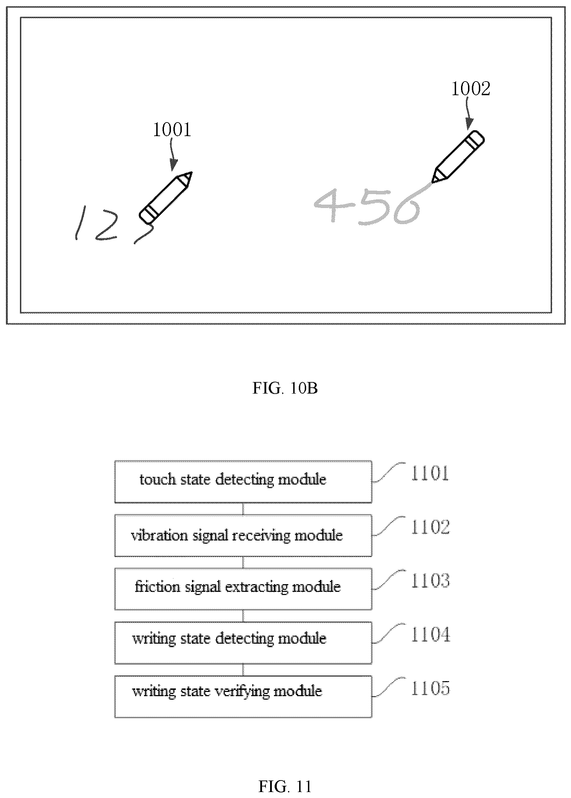

For example, as shown in FIG.10A and FIG.10B, one end of the touch object 1001 is made of wood to simulate a pen, and the other end of the touch object is made of rubber to simulate an eraser. One end of the touch object 1002 is made of plastic to simulate a pen, and the other end of the touch object is made of rubber to simulate an eraser.

Assumed that user A uses one end of the analog pen in touch object 1001 to write "123", and user B uses one end of the analog pen in touch object 1002 to write "456". The color of "123" is darker than the color of "456", and the width of "123" is smaller than the width of "456", so the contents written by user A and user B can be clearly distinguished.

If user A wants to modify "3", he can use the end of the touch object 1001 that simulates an eraser to change "3".

In this example, the user can write following the habit of using a pencil, without having to learn additional shortcuts to call the eraser function, which improves writing efficiency.

It should be noted that, for the sake of simplicity, the method embodiments are described as a series of action combinations, but those skilled in the art should be aware that the embodiments of the present disclosure are not limited by the order of the actions described, because according to the embodiments of the present disclosure, certain steps can be performed in other orders or simultaneously. Secondly, those skilled in the art should also be aware that the embodiments described in the specification are all preferred embodiments, and the actions involved are not necessarily required by the embodiments of the present disclosure.

### Embodiment 3

FIG.11 is a structural schematic diagram of a writing verification device according to Embodiment 3 of the present disclosure, which is applied to an interactive board. The device may include the following modules:
a touch state detecting module 1101, which is configured to scan an infrared signal on a surface of the display screen to detect a touch state between the touch object and the display screen;
a vibration signal receiving module 1102, which is configured to receive a vibration signal generated in the display screen;
a friction signal extracting module 1103, which is configured to extract a friction signal from the vibration signal, wherein the friction signal represents that the touch object rubs the surface of the display screen;
a writing state detecting module 1104, which is configured to detect a writing state between the touch object and the display screen based on the friction signa; and
a writing state verifying module 1105, which is configured to verify the writing state based on the friction signal in a case that the writing state is that the touch object is writing on the surface of the display screen.

In an embodiment of the present disclosure, the friction signal extracting module 1103 includes:
a first filtering module, which is configured to perform high-pass filtering or first band-pass filtering on the vibration signal to filter out tapping signals and background signals, and leave friction signals, where the tapping signal represents that a touch object taps the surface of the display screen, and the background signal represents that no touch object taps or rubs the surface of the display screen; and
a first gain module, which is configured to perform a first gain processing on the friction signal to increase the difference between the friction signal and the background signal.

In an embodiment of the present disclosure, the first gain module includes:
a multiplier determination module, which is configured to determine a multiplier that is independent of distortion; and
a multiplier gain module, which is configured to perform a first gain processing on the friction signal based on the multiplier to increase the difference between the friction signal and the background signal.

In an embodiment of the present disclosure, the writing state detecting module 1104 includes:
a threshold determination module, which is configured to determine whether the friction signal is greater than a threshold value; if so, calling a writing determination module, if not, calling a non-writing determination module;
a writing determination module, which is configured to determine that the writing state between the touch object and the display screen is that the touch object is writing on the surface of the display screen; and
a non-writing determination module, which is configured to determine that the writing state between the touch object and the display screen is that the touch object is not writing on the surface of the display screen.

In an embodiment of the present disclosure, the threshold determination module includes:
a time domain determination module, which is configured to determine a threshold value set for the time domain;
a time domain judgment module, which is configured to judge whether the friction signal is greater than the threshold value in the time domain; or
a frequency domain determination module, which is configured to determine a threshold value set for the frequency domain;
a friction signal conversion module, which is configured to convert the friction signal from the time domain to the frequency domain;
a frequency domain judgment module, which is configured to judge whether the friction signal is greater than the threshold in the frequency domain.

In an embodiment of the present disclosure, the writing state verifying module 1105 includes:
a validity determination module, which is configured to determine that the writing state is valid if the touch state is that the touch object approaches or touches the surface of the display screen; and
an invalid determination module, which is configured to determine that the writing state is invalid if the touch state is that the touch object does not approach or touch the surface of the display screen.

In an embodiment of the present disclosure, the device further includes:
a touch signal extracting module, which is configured to extract a touch signal from the vibration signal, where the touch signal includes the friction signal and a tapping signal, and the tapping signal represents that a touch object taps the surface of the display screen;
a second gain module, which is configured to sequentially perform multiple stages of second gain processing on the touch signal;
a target signal selecting module, which is configured to select a target signal suitable for identifying the material of the touch object from the touch signal subjected to all stages of the second gain processing;
a material identifying module, which is configured to identify the material of the touch object based on the target signal; and
a writing operation execution module, which is configured to respond to the valid writing state and perform a writing-related operation on the writing interface based on the material.

In an embodiment of the present disclosure, the touch signal extracting module includes:
a second filtering module, which is configured to perform low-pass filtering or second band-pass filtering on the vibration signal to obtain a touch signal.

In an embodiment of the present disclosure, the second gain module includes:
a gain completion judgment module, which is configured to judge whether all stages of the second gain processing are completed; if not, the touch signal determination module is called, and if so, a touch signal output module is called;
a touch signal determination module, which is configured to determine the touch signal for the current stage; when the current stage is the first stage, the touch signal for the current stage is the touch signal extracted from the vibration signal; when the current stage is not the first stage, the touch signal for the current stage is the touch signal subjected to the previous stage of second gain processing;
a current stage gain module, which is configured to perform the current stage of the second gain processing on the touch signal for the current stage, and returning to perform the determination of whether all stages of the second gain processing are completed; and
a touch signal output module, which is configured to output the touch signal subjected to each stage of the second gain processing, where a multiplier of the second gain processing decrease along the stage number.

In an embodiment of the present disclosure, the target signal selecting module includes:
a non-distortion selecting module, which is configured to select an undistorted candidate signal from the touch signal subjected to all stages of the second gain processing;
a stage selecting module, which is configured to select the candidate signal with the highest stage number as the target signal.

In an embodiment of the present disclosure, the material identifying module includes:
a target signal conversion module, which is configured to convert the target signal from the time domain to the frequency domain;
a center frequency calculating module, which is configured to calculate the center frequency of the target signal in the frequency domain, recorded as the target center frequency;
a difference calculating module, which is configured to calculate a difference between the target center frequency and a plurality of sample center frequencies, where the sample center frequencies are associated with materials; and
a center frequency corresponding module, which is configured to set the material corresponding to the sample center frequency with the smallest difference as the material of the touch object.

The writing verification device provided in the embodiment of the present disclosure can perform the writing verification method provided in any embodiment of the present disclosure, and has the corresponding functional modules and beneficial effects of the execution method.

### Embodiment 4

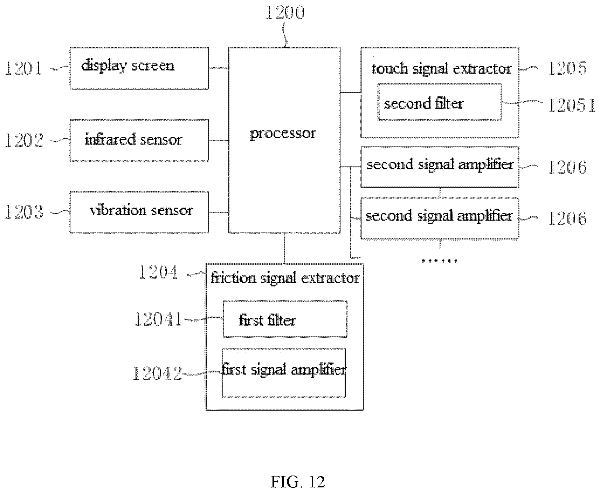

FIG.12 is a structural schematic diagram of an interactive board according to Embodiment 4 of the present disclosure, which may include the following modules:
a display screen 1201;
an infrared sensor 1202, which is configured to scan infrared signals on a surface of the display screen to detect the touch state between the touch object and the display screen;
a vibration sensor 1203, which is configured to receive a vibration signal generated in the display screen;
a friction signal extractor 1204, which is configured to extract a friction signal from the vibration signal, where the friction signal represents that the touch object is rubbing on the surface of the display screen; and
a processor 1200, which is configured to detect the writing state between the touch object and the display screen based on the friction signal; if the writing state is that the touch object is writing on the surface of the display screen, the writing state is verified based on the friction signal.

In an embodiment of the present disclosure, the friction signal extractor 1204 includes:
a first filter 12041, which is configured to perform high-pass filtering or first band-pass filtering on the vibration signal to filter out tapping signals, background signals, and leave friction signals, where the tapping signal represents that a touch object taps the surface of the display screen, and the background signal represents that no touch object taps or rubs the surface of the display screen;
a first signal amplifier 12042, which is configured to perform a first gain processing on the friction signal to increase the difference between the friction signal and the background signal.

In an embodiment of the present disclosure, the first signal amplifier 12042 is further configured to:
determine a multiplier that is not related to distortion; and
perform a first gain processing on the friction signal based on the multiplier to increase the difference between the friction signal and the background signal.

In an embodiment of the present disclosure, the processor 1200 is further configured to:
determine whether the friction signal is greater than a threshold value;

If yes, determine that the writing state between the touch object and the display screen is that the touch object is writing on the surface of the display screen;

If not, determine that the writing state between the touch object and the display screen is that the touch object is not writing on the surface of the display screen.

In an embodiment of the present disclosure, the processor 1200 is further configured to:
determine a threshold value set for the time domain;
determine in the time domain whether the friction signal is greater than the threshold value; or
determine a threshold value set for the frequency domain;
convert the friction signal from the time domain to the frequency domain;
determine in the frequency domain whether the friction signal is greater than the threshold value.

In an embodiment of the present disclosure, the processor 1200 is further configured to:
if the touch state is that the touch object approaches or touches the surface of the display screen, determine that the writing state is valid;
if the touch state is that no touch object approaches or touches the surface of the display screen, determine that the writing state is invalid.

In an embodiment of the present disclosure, the device further includes:
a touch signal extractor 1205, which is configured to extract a touch signal from the vibration signal, where the touch signal includes the friction signal and a tapping signal, and the tapping signal represents that a touch object taps the surface of the display screen; and
multiple stages of second signal amplifiers 1206, which is configured to sequentially perform multiple stages of the second gain processing on the touch signal;
where the processor 1200 is further configured to select a target signal suitable for identifying the material of the touch object from the touch signal subjected to all stages of the second gain processing; and identify the material of the touch object based on the target signal;
the display screen 1201 is configured to respond to the valid writing state and perform a writing-related operation on the writing interface based on the material.

In an embodiment of the present disclosure, the touch signal extractor 1205 includes:
a second filter 12051, which is configured to perform low-pass filtering or second band-pass filtering on the vibration signal to obtain a touch signal.

In an embodiment of the present disclosure, each stage of the second signal amplifier 1206 is further used to perform the current stage of second gain processing on the touch signal for the current stage;
when the current stage is the first stage, the touch signal for the current stage is the touch signal extracted from the vibration signal; when the current stage is not the first stage, the touch signal for the current stage is the touch signal subjected to the previous stage of second gain processing;
where the multiplier of the second gain processing decrease along the stage number.

In an embodiment of the present disclosure, the processor 1200 is further configured to:
select an undistorted candidate signal from the touch signal subjected to all stages of the second gain processing; and
select the candidate signal with the highest stage number as the target signal.

In an embodiment of the present disclosure, the processor 1200 is further configured to:
convert the target signal from the time domain to the frequency domain;
calculate a center frequency of the target signal in the frequency domain, recorded as a target center frequency;
calculating a difference between the target center frequency and a plurality of sample center frequencies, where the sample center frequencies are associated with materials; and
set the material corresponding to the sample center frequency with the smallest difference as the material of the touch object.

The interactive board provided in the embodiment of the present disclosure can execute the writing verification method provided in any embodiment of the present disclosure, and has the corresponding functional modules and beneficial effects of the execution method.

### Embodiment 5

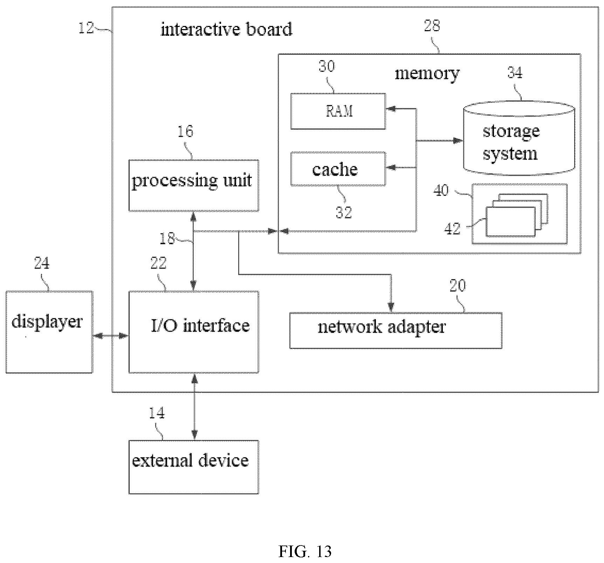

FIG.13 is a structural schematic diagram of an interactive board according to Embodiment 5 of the present disclosure. FIG.13 illustrates a block diagram of an exemplary interactive board 12 suitable for implementing the embodiments of the present disclosure. The interactive board 12 shown in FIG.13 is only an example and should not bring any limitation to the functions and scope of use of the embodiments of the present disclosure.

As shown in FIG.13, the interactive board 12 is presented in the form of a general-purpose computing device. The components of the interactive board 12 may include, but are not limited to: one or more processors or processing units 16, a system memory 28, and a bus 18 connecting different system components (including the system memory 28 and the processing unit 16).

The bus 18 represents one or more of several types of bus structures, which includes a memory bus or memory controller, a peripheral bus, an accelerated graphics port, a processor or a local bus using any of a variety of bus architectures. By way of example, these architectures include, but are not limited to, an Industry Standard Architecture (ISA) bus, a Micro Channel Architecture (MAC) bus, an Enhanced ISA bus, a Video Electronics Standards Association (VESA) local bus, and a Peripheral Component Interconnect (PCI) bus.

The interactive board 12 typically includes a variety of computer system readable media. These media can be any available media that can be accessed by the interactive board 12, which includes volatile and non-volatile media, removable and non-removable media.

The system memory 28 may include computer system readable media in the form of volatile memory, such as random access memory (RAM) 30 and/or cache memory 32. The interactive board 12 may further include other removable/non-removable, volatile/non-volatile computer system storage media. By way of example only, the storage system 34 may be used to read and write to a non-removable, non-volatile magnetic medium (not shown in FIG. 13, commonly referred to as a "hard drive"). Although not shown in FIG. 13, a magnetic disk drive for reading and writing to a removable non-volatile magnetic disk (e.g., a "floppy disk") and an optical disk drive for reading and writing to a removable non-volatile optical disk (e.g., a CD-ROM, DVD-ROM or other optical medium) may be provided. In these cases, each drive may be connected to the bus 18 via one or more data media interfaces. The memory 28 may include at least one program product having a set (e.g., at least one) of program modules that are configured to perform the functions of various embodiments of the present disclosure.

A program/entity 40 having a set (at least one) of program modules 42 may be stored, for example, in the memory 28, such program modules 42 including, but not limited to, an operating system, one or more application programs, other program modules, and program data, each of which or some combination may include an implementation of a network environment. The program modules 42 generally perform the functions and/or methods of the embodiments described herein.

The interactive board 12 may also communicate with one or more external devices 14 (e.g., keyboards, pointing devices, displayers 24, etc.), one or more devices that enable a user to interact with the interactive board 12, and/or any device that enables the interactive board 12 to communicate with one or more other computing devices (e.g., network cards, modems, etc.). Such communication may be performed via an input/output (I/O) interface 22. In addition, the interactive board 12 may also communicate with one or more networks (e.g., local area networks (LANs), wide area networks (WANs), and/or public networks, such as the Internet) via a network adapter 20. As shown, the network adapter 20 communicates with other modules of the interactive board 12 via a bus 18. It should be understood that, although not shown in the figure, other hardware and/or software modules may be used in conjunction with the interactive board 12, including but not limited to: microcode, device drivers, redundant processing units, external disk drive arrays, RAID systems, tape drives, and data backup storage systems.

The processing unit 16 executes various functional applications and data processing by running programs stored in the system memory 28, such as implementing the writing verification method provided in the embodiment of the present disclosure.

### Embodiment 6

Embodiment 6 of the present disclosure further provides a computer-readable storage medium, on which a computer program is stored. When the computer program is executed by a processor, the various processes of the above-mentioned writing verification method are implemented, and the same technical effect can be achieved. To avoid repetition, it would not be repeated here.

Computer-readable storage media may include, for example, but are not limited to, electrical, magnetic, optical, electromagnetic, infrared, or semiconductor systems, devices or devices, or any combination of the above. More specific examples of computer-readable storage media (a non-exhaustive list) include: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In this document, a computer-readable storage medium may be any tangible medium containing or storing a program that may be used by or in conjunction with an instruction execution system, device or device.

Note that the above are only preferred embodiments of the present disclosure and the technical principles used. Those skilled in the art would understand that the present disclosure is not limited to the specific embodiments described herein, and that various obvious changes, readjustments and substitutions may be made by those skilled in the art without departing from the scope of protection of the present disclosure. Therefore, although the present disclosure has been described in more detail through the above embodiments, the present disclosure is not limited to the above embodiments, and may also include more other equivalent embodiments without departing from the concept of the present disclosure, and the scope of the present disclosure is determined by the scope of the appended claims.

## Claims

1. A writing verification method applied to an interactive board, comprising:
scanning an infrared signal on a surface of a display screen to detect a touch state between a touch object and the display screen;
receiving a vibration signal generated in the display screen;
extracting a friction signal from the vibration signal, wherein the friction signal represents that the touch object rubs the surface of the display screen;
detecting a writing state between the touch object and the display screen based on the friction signal;
in a case that the writing state is that the touch object is writing on the surface of the display screen, verifying the writing state based on the friction signal.

2. The method of claim 1, wherein the extracting the friction signal from the vibration signal comprises:
performing high-pass filtering or first band-pass filtering on the vibration signal to filter out a tapping signal and a background signal, leaving the friction signal, wherein the tapping signal represents that the touch object taps the surface of the display screen, and the background signal represents that no touch object taps or rubs the surface of the display screen; and
performing a first gain processing on the friction signal to increase the difference between the friction signal and the background signal.

3. The method of claim 2, wherein the performing the first gain processing on the friction signal to increase the difference between the friction signal and the background signal comprises:
determining a multiplier that is not related to distortion; and
performing a first gain processing on the friction signal based on the multiplier to increase the difference between the friction signal and the background signal.

4. The method of claim 1, wherein the detecting the writing state between the touch object and the display screen based on the friction signal comprises:
determining whether the friction signal is greater than a threshold value;
if yes, determining that the writing state between the touch object and the display screen is that the touch object is writing on the surface of the display screen; or
if not, determining that the writing state between the touch object and the display screen is that the touch object is not writing on the surface of the display screen.

5. The method of claim 4, wherein the determining whether the friction signal is greater than the threshold value comprises:
determining a threshold value set for the time domain; and
determining whether the friction signal is greater than the threshold value in the time domain; or
determining a threshold value set for the frequency domain;
converting the friction signal from the time domain to the frequency domain; and
determining whether the friction signal is greater than the threshold value in the frequency domain.

6. The method of claim 1, wherein the verifying the writing state based on the friction signal comprises:
in a case that the touch state is that the touch object approaches or touches the surface of the display screen, determining that the writing state is valid; or
in a case that the touch state is that no touch object approaches or touches the surface of the display screen, determining that the writing state is invalid.

7. The method of any one of claims 1 to 6, further comprising:
extracting a touch signal from the vibration signal, wherein the touch signal includes the friction signal and a tapping signal, and the tapping signal represents that a touch object taps the surface of the display screen;
sequentially performing multiple stages of second gain processing on the touch signal;
selecting a target signal suitable for identifying a material of the touch object from the touch signal subjected to all stages of the second gain processing;
identifying the material of the touch object based on the target signal; and
in response to a valid writing state, performing a writing-related operation on a writing interface based on the material.

8. The method of claim 7, wherein the extracting the touch signal from the vibration signal comprises:
performing low-pass filtering or second band-pass filtering to obtain the touch signal.

9. The method of claim 7, wherein the sequentially performing multiple stages of second gain processing on the touch signal comprises:
determining whether all stages of the second gain processing are completed;
if not, determining the touch signal for the current stage, wherein when the current stage is a first stage, the touch signal for the current stage is the touch signal extracted from the vibration signal; or when the current stage is not the first stage, the touch signal for the current stage is the touch signal subjected to a previous stage of second gain processing; and
performing the current stage of the second gain processing on the touch signal for the current stage; and
returning to perform the determination of whether all stages of the second gain processing are completed; or
if yes, outputting the touch signal subjected to each stage of the second gain processing, wherein the multiplier of the second gain processing decreases along with the stage number.

10. The method of claim 7, wherein the selecting the target signal suitable for identifying the material of the touch object from the touch signal subjected to all stages of the second gain processing comprises:
selecting an undistorted candidate signal from the touch signal subjected to all stages of the second gain processing; and
selecting the candidate signal with the highest stage number as the target signal.

11. The method of claim 7, wherein the identifying the material of the touch object based on the target signal comprises:
converting the target signal from the time domain to the frequency domain;
calculating a center frequency of the target signal in the frequency domain, the center frequency of the target signal being recorded as a target center frequency;
calculating differences between the target center frequency and a plurality of sample center frequencies, wherein the sample center frequencies are associated with materials; and
setting the material corresponding to the sample center frequency with the smallest difference as the material of the touch object.

12. A writing verification device applied to an interactive board, comprising:
a touch state detecting module configured to scan an infrared signal on a surface of the display screen to detect a touch state between the touch object and the display screen;
a vibration signal receiving module configured to receive a vibration signal generated in the display screen;
a friction signal extracting module configured to extract a friction signal from the vibration signal, wherein the friction signal represents that the touch object rubs the surface of the display screen;
a writing state detecting module configured to detect a writing state between the touch object and the display screen based on the friction signal; and
a writing state verifying module configured to verify the writing state based on the friction signal in a case that the writing state is that the touch object is writing on the surface of the display screen.

13. An interactive board, comprising:
a display screen;
an infrared sensor configured to scan an infrared signal on a surface of the display screen to detect a touch state between the touch object and the display screen;
a vibration sensor configured to receive a vibration signal generated in the display screen;
a friction signal extractor configured to extract a friction signal from the vibration signal, wherein the friction signal represents that the touch object rubs the surface of the display screen; and
a processor configured to detect a writing state between the touch object and the display screen based on the friction signal, and verify the writing state based on the friction signal in a case that the writing state is that the touch object is writing on the surface of the display screen.

14. An interactive board, comprising:
one or more processors; and
a memory for storing one or more programs;
wherein the one or more programs, when executed by the one or more processors, perform the writing verification method of any one of claims 1 to 11.

15. A computer-readable storage medium, on which a computer program is stored, wherein the computer program, when executed by a processor, performs the writing verification method of any one of claims 1-11.
